# EUROPEAN PATENT APPLICATION

(11) **EP 1 394 277 A1**
(43) Date of publication of application: **03.03.2004**
(21) Application number: 03016688.8
(22) Date of filing: 01.08.2003
(51) Int. Cl.: C22C 1/04, B22F 3/24, F16C 33/12

(54) **Sintered material product and method for manufacturing the same**

(30) Priority: 05.08.2002 JP 2002227797
(71) Applicant: Mitsubishi Materials Corporation, Chiyoda-ku, Tokyo 100-0004 (JP)
(72) Inventor: Mori, Kazuhiko, Chuo-ku, Tokyo 103-0027 (JP); Nakano, Shinnosuke, Chuo-ku, Tokyo 103-0027 (JP); Kodama, Tokunori, Chuo-ku, Tokyo 103-0027 (JP); Shimizu, Teruo, Niigata-shi, Niigata 950-8640 (JP); Maruyama, Tsuneo, Niigata-shi, Niigata 950-8640 (JP)
(74) Representative: VOSSIUS & PARTNER

(57) **Abstract**

A sintered copper alloy material product is provided on which a skin (particularly, a skin of a solid lubricant with low adhesion, such as PTFE or molybdenum disulfide) is securely formed on the surface thereof and has good sliding properties and good seizure resistance under unlubricating environments or under corrosive environments. A sintered copper alloy material is processed using a selective chemical etching solution containing a compound of one kind or more selected from the group of consisting of peroxide, peroxocompound, chromic acid and permanganic acid and a compound of one kind or more selected from the group of consisting of phosphoric acid, sulfuric acid, nitric acid, hydrochloric acid, hydrofluoric acid, zirconic hydrofluoric acid, titanic hydrofluoric acid, titanic acid, molybdic acid, tungstic acid, vanadic acid, niobic acid, and organic chelating agent. Thereafter, a lubricating skin is on the surface of the processed material.

## Description

The present invention relates to a sintered material product used for transportation machines such as automobiles, ships, other general industrial machinery, household electric appliances, OA (office automation) equipment, and building materials or printing. Particularly, the present invention relates to a sintered material product having good sliding properties and good corrosion resistance.

Copper alloys, which have good heat, electrical conduction and good corrosion resistance, and good workability, have been used in various industrial fields such as buildings, printings, electrical facilities, automobiles, and others. Particularly, copper alloys with good corrosion resistance and good sliding properties are broadly used for sliding parts in various gears, guide rails, automobile parts, household electric appliances, pumps, motors, OA equipment, and others.

In environments where the lubricating oil cannot be used and long-term durability is required, the slide surface is subjected to a surface treatment.

For example, it has been proposed to form on the slide surface a fluorocarbon resin coating, which is superior in weathering resistance, dirt prevention, water repellent, and lubricating characteristic. Alternatively, it has been proposed to form on the slide surface a functional ceramic film, which has heat resistance, wear resistance, hydrophilicity, photocatalyst property, and far-infrared reflection function.

However, the above-mentioned films generally have poor adhesion to a sintered copper alloy being a substrate, thus resulting in poor durability.

JP-P1993-157115A discloses the method of impregnating a resin, such as polyamide or polyimide, into a sintered copper alloy. The above-mentioned resins tend to be easily impregnated into pores of the sintered copper alloy, thus providing good adhesion to the sintered alloy material.

However, compared with films of fluorocarbon resin such as PTFE (polytetrafluoroethylene), the above-mentioned resin films are poor in sliding properties, so that a sufficient sliding performance cannot be obtained.

In contrast, compared with resins such as polyamide and polyimide, it is difficult to impregnate fluorocarbon resins such as PTFE into pores of a sintered copper alloy. Hence, the fluorocarbon resins show poor adhesive property to copper alloys.

A solid lubricant such as molybdenum disulfide indicates a tendency similar to those of fluorocarbon resins.

In order to improve the film adhesive property, it has been considered to blast the sintered copper alloy with sands or ceramic particles.

This blasting technique improves the adhesive property but blast particles pierce the substrate (of a soft copper alloy). The pierced blast particles wear and deform the opposite material and degrade the seizure resistance or durability. For that reason, the blasting technique cannot be employed to sintered copper alloy products.

The present invention is made to solve the above-mentioned problems.

An object of the present invention is to provide a sintered copper alloy material product having good sliding properties and good durability.

Another object of the present invention is to provide a sintered copper alloy material product on which a skin (particularly, a skin of a solid lubricant with low adhesion, such as PTFE or molybdenum disulfide) is securely formed on the surface thereof.

Further another object of the present invention is to provide a sintered copper alloy material product having good sliding properties and good durability under unlubricating environments or corrosive environments.

It has been found that a component prone to corrosion (an easy-corrosive component) such as zinc contained in a copper alloy corrodes under severe corrosive environment so that an oxidation product is produced. It was found that the corrosion accelerates seizure. In order to prevent the earlier seizure, it was considered to apply a solid lubricant, such as PTFE or molybdenum disulfide, on the surface of the substrate (a sintered copper alloy material). However, the solid lubricant shows poor adhesion to the substrate (a sintered copper alloy material). Consequently, this approach proved that a sufficient effect could not be obtained.

Using a solution containing a compound of one kind or more selected from the group consisting of peroxide, peroxocompound, chromic acid and permanganic acid, easy-corrosive components or oxide products were removed selectively. Thereafter, a skin of a solid lubricant such as PTFE or molybdenum disulfide was formed. Products produced thus have the skin invaded into pores of the substrate (a sintered copper alloy material). This conformation has an improved skin adhesion. Furthermore, it has been known that the removal of the corrosive product leads to an improved durability (corrosion resistance).

The present invention was made based on the above-mentioned knowledge.

The above-mentioned problems are solved by the following manufacturing methods. That is, a method for manufacturing a sintered material product having a sintered copper alloy material and a skin formed on the sintered copper alloy material, comprises the steps of (A) processing said sintered copper alloy material with a selective chemical etching solution, and (C) forming a skin on the surface of said sintered copper alloy material after the step (A).

Particularly, a method for manufacturing a sintered material product having a sintered copper alloy material and a skin formed on the sintered copper alloy material, comprises the step of (A) processing the sintered copper alloy material with a selective chemical etching solution, (B) forming a layer of a metal phosphate and/or a metal oxide on the surface of the sintered copper alloy material after the step (A), and (C) forming a skin on the surface of the sintered copper alloy material after the step (B).

The processing temperature and the processing time of selective chemical etching solution are not restricted, unless specified. The processing temperature is, for example, room temperature to 50° C. The processing time is, for example, 1 to 10 minutes.

The sintered product produced thus has the following structure.

A sintered material product according to the present invention includes a sintered copper alloy material and a skin formed on the sintered copper alloy material. The skin is, particularly, a paint film containing a solid lubricant.

The sintered copper alloy material has pores. The inlet of each pore has a diameter of 10 to 200 µm (particularly, 20 to 100 µm) . An average value of (inlet pore diameter)/(inner pore diameter) is 2 or more (particularly, 2 to 20, or 5 to 20). The porosity is 2 to 35 % by volume (particularly, 10 to 25 % by volume).

Moreover, a layer of a metal phosphate and/or metal oxide is preferably formed underneath of the skin.

The selective chemical etching solution used in the step (A) is, preferably, a solution containing a compound of one kind or more selected from the group consisting of peroxide, peroxocompound, chromic acid, and permanganic acid. Particularly, the etching solution is, preferably, an aqueous solution containing peroxide or peroxocompound.

As peroxocompound are listed, for example, peroxosulfuric acid, peroxophosphoric acid, peroxovanadic acid, peroxoniobic acid, peroxotantalic acid, peroxoboric acid, peroxotitanic acid, peroxotungstic acid, peroxomolybdic acid, and peroxochromic acid. Soluble salts of the above-mentioned acids. Particularly, peroxosulfuric acid and salt thereof, may be used. Particularly, ammonium salt, sodium salt, and potassium salt of peroxodisulfuric acid are preferable.

The peroxide is preferably hydrogen peroxide.

The preferable concentration of peroxide or peroxocompound is 1 to 30 % by weight (particularly, 3 to 20 % by weight). The reason is that an excessively low concentration results in a small selective removing effect of easy-corrosive components or oxides. In contrast, an excessively high concentration results in precipitation of crystals and instability of etching solution.

The selective chemical etching solution contains, preferably, peroxide or peroxocompound, as well as a compound of one kind or more selected from the group consisting of phosphoric acid, sulfuric acid, nitric acid, hydrochloric acid, hydrofluoric acid, zirconic hydrofluoric acid, titanic hydrofluoric acid, titanic acid, molybdic acid, tungstic acid, vanadic acid, niobic acid, and organic chelating agent (preferably, tartaric acid, citric acid, EDTA, organic phosphonic acid, or phytic acid, having a chelating effect to copper).

A selective chemical etching solution, having a preferable combination, is an aqueous solution including, for example, phosphoric acid-peroxosulfuric acid, peroxophosphoric acid-sulfuric acid, phosphoric acid-hydrogen peroxide, tartaric acid-hydrogen peroxide, phosphoric acid-nitric acid-hydrogen peroxide, or sulfuric acid-hydrogen peroxide.

pH of the selective chemical etching solution is preferably 1 to 5. pH is adjusted appropriately using alkalis such as aqueous ammonia, ammonium carbonate, sodium hydroxide, sodium carbonate, or potassium hydroxide.

In the present invention, peroxide and peroxocompound are especially used for the following reasons. That is, the desired selective etching cannot be realized though the mechanical surface roughening method using the blasting process or through the chemical etching using common acid or alkali. The selective etching can be effectively realized using peroxide or peroxocompound. The skin is formed on the sintered copper alloy material after the step (A) so as to invade into the surface thereof. This can provide a very high anchor effect and high skin adhesion.

If the selective chemical etching solution does not contain acid (e.g. phosphoric acid) or organic chelating agent, it is considered that after the selective chemical etching process, post treatment may be carried out with acid (e.g. phosphoric acid) or with an organic chelating agent. However, this approach results in an increased number of production steps.

After the step (A), it is preferable to process the sintered copper alloy material using a solution containing a metal compound which is preferably selected from one kind or more selected from the group consisting of Zn, Ca, Mg, Mn, Ni, Co, Mo, W, Cu, Sn, Ti, Zr, V, In, and Cr.

For example, a sintered copper alloy material is processed using a metal ion aqueous solution of sulfate, acetate, chloride, phosphate, carbonate, or hydroxide of the above-mentioned metals (e.g. having a concentration of 0.02 to 2% by weight) or using colloidal sol of the above-mentioned metals oxide. Thus, a metal phosphate layer and/or a metal oxide layer is formed on the surface of the sintered copper alloy material subjected to the selective chemical etching. A preferable thickness of the layer is 0.1 to 2 µm (preferably, 0.2 to 1 µm). This layer improves the corrosion resistance. The adhesiveness between the layer and the skin formed on the layer is improved.

After the step (A) and the step (B), it is preferable to rinse quickly the sintered copper alloy material in water. In other words, acids left in the sintered copper alloy material are removed by water washing. For example, the acid remaining in the sintered copper alloy material causes a degradation of corrosion resistance. It is particularly preferable to subject the sintered copper alloy material to ultrasonic cleaning. That is, the smut remaining in the surface of the sintered copper alloy material is removed through the ultrasonic cleaning, so that the material surface with good adhesive property can be obtained.

After the water rinsing, it is preferable to process the sintered copper alloy material with an aqueous solution containing organic alkali compound (e.g. alkanolamine). This process neutralizes the acid remaining in the sintered copper alloy material, thus improving the corrosion resistance. Moreover, the adhesive property of the skin formed on the sintered copper alloy material is improved. Low molecular compounds, each of which the molecular structure has at least one amino group, are preferable as organic alkali compounds. For example, as low molecular compounds are listed monoethanolamine, diethanolamine, triethanolamine, morpholine, derivatives of them, and alkoxysilane having various amino groups. These compounds improve the surface adhesive property of a solid lubricative skin and the wetting property of paint.

A skin (particularly, a solid lubricant skin) is formed on the surface of the sintered copper alloy material processed as shown above.

A coating film or paint film containing a solid lubricant is listed as the skin. As solid lubricants are appropriately used, for example, polytetrafluoroethylene (PTFE), tetrafluoroperfluoroalkylvinylethercopolymer (PFA), graphite, molybdenum disulfide, tungsten disulfide, boron nitride, tungsten fluoride, titanium nitride. As binder components of a coating film are listed, for example, resins (e.g. thermoplastic resins) such as polyester, polyolefin, polyurethane, polyacryl, polyamide, polyimide, epoxy, and silicone. As these paints can be used, for example, FL-J4668 produced by Nihon Parkerizing Co., Ltd. and EB3 and LHF4B produced by Kawamura Research Laboratories, Inc. A paint containing the various components is applied on the sintered copper alloy material using the spray method, the dipping method, the roll coating method, the powder method or the electrodeposition method and then is baked, so that a painted film is formed. The thickness of the painted film is preferably, for example, 1 to 40 µm (particularly, the film thickness is 2 to 20 µm or 1 to 10 µm)

According to the present invention, the sintered copper alloy contains copper. The content of copper is preferably 20 to 95 % by weight (is, particularly, 50 to 90 % by weight). In addition, as a component other than Cu is listed, for example, Zn, Fe, Mn, Al, Co, P, Mo, Sn, Ni or C. Specifically, the sintered copper alloy material is B031, B110, B062, or B060.

Prior to the selective chemical etching process, it is preferable to degrease and clean the sintered copper alloy material. Thus, oil contents adhering to the surface of the sintered copper alloy material are removed.

The products produced as described above proved that the durability and the seizure resistance (sliding property) are remarkably improved.

### EXAMPLES

Specific embodiments will be described below together with a comparative example. However, the invention should not be construed as being limited to these illustrative embodiments.

### Embodiment 1

Copper alloy powder, which has a grain size of 150 µm or less, was molded in a predetermined shape under a molding pressure of 150 to 350 MPa. Thereafter, the molded material was sintered for 40 minutes in an atmosphere of an ammonium decomposition gas at 700 to 900 ° C. The sintered material was corrected with a sizing pressure of 100 to 400 MPa.

First, the sliding parts made of the resultant sintered copper alloy material B031 (Cu of 85% by weight, Sn of 10% by weight and C of 5% by weight) was degreased. The degreasing agent was alkali degreasing agent (FC-315 produced by Nihon Parkerizing Co., Ltd.). The concentration of the degreasing agent was 20 g/l. The degreasing temperature was 60 ° C. The degreasing time was 2 minutes.

After degreasing, the sliding parts were rinsed in water. Thereafter, the sliding parts were dipped in the aqueous solution containing peroxodisulfate potassium (of a concentration of 5% by weight) and sulfuric acid (of a concentration of 5% by weight). The dipping temperature was 27 ° C. The dipping time was 180 seconds.

After dipping, the sliding parts were cleaned in running water.

Thereafter, FL-J4668 (containing a main constituent of PTFE) (produced by Nihon Parkerizing Co., Ltd) was sprayed with a spray gun so as to have a dry thickness of 3 µm. Then, the sprayed coating was baked at 200 ° C.

### Embodiment 2

B031-made sliding parts, obtained in a manner similar to that of the embodiment 1, were used.

First, the sliding parts were degreased. The degreasing agent was FC-315. The concentration of the degreasing agent was 20 g/l. The degreasing temperature was 60 ° C. The degreasing time was 2 minutes.

After degreasing, the sliding parts were rinsed in water.

Thereafter, the sliding parts were dipped in the aqueous solution containing peroxophosphoric sodium (of a concentration of 5% by weight) and phosphoric acid (of a concentration of 10% by weight). The dipping temperature was 27 ° C. The dipping time was 180 seconds.

After dipping, the sliding parts were cleaned in running water.

Thereafter, LHF4B (containing a main constituent of PTFE) (produced by Kawamura Research Laboratories, Inc.) was sprayed with a spray gun so as to have a dry thickness of 4 µm. Then, the sprayed coating was baked at 200 ° C.

### Embodiment 3

B031-made sliding parts, obtained in a manner similar to that of the embodiment 1, were used.

First, the sliding parts were degreased. The degreasing agent, FC-315, was used. The concentration of the degreasing agent was 20 g/l. The degreasing temperature was 60 ° C. The degreasing time was 2 minutes.

After degreasing, the sliding parts were rinsed in water.

Thereafter, the sliding parts were dipped in the aqueous solution containing chromic acid (of a concentration of 5% by weight) and hydrogen peroxide (of a concentration of 5% by weight). The dipping temperature was 27 ° C. The dipping time was 180 seconds.

After dipping, the sliding parts were cleaned in running water.

Next, the sliding parts were dipped in an aqueous solution containing phosphoric acid (of 5% by weight) and zinc nitrate (2% by weight). The dipping temperature was 45 ° C. The dipping time was 60 seconds.

Then, the sliding parts were subjected to ultrasonic cleaning (25 KHz x 30 minutes).

Thereafter, FL-J4668 was sprayed with a spray gun so as to form a dry thickness of 3 µm. Then, the sprayed coating was baked at 200 ° C.

### Embodiment 4

B031-made sliding parts, obtained in a manner similar to that of the embodiment 1, were used.

First, the sliding parts were degreased. The degreasing agent, FC-315, was used. The concentration of the degreasing agent was 20 g/l. The degreasing temperature was 60 ° C. The degreasing time was 2 minutes.

After degreasing, the sliding parts were rinsed in water.

Thereafter, the sliding parts were dipped in an aqueous solution containing peroxodisulfate potassium (of a concentration of 5% by weight) and sulfuric acid (of a concentration of 5% by weight). The dipping temperature was 27 ° C. The dipping time was 180 seconds.

After dipping, the sliding parts were cleaned in running water.

Next, the sliding parts were dipped in an aqueous solution of monoethanolamine (of a concentration of 0.5% by weight) and then were lifted up after a lapse of 15 seconds. Successively, the sliding parts were dried at 120 ° C for 10 seconds.

Thereafter, FL-J4668 was sprayed with a spray gun so as to form the dry thickness of 3 µm. Then, the sprayed coating was baked at 200 ° C.

### Comparative Example 1

B031-made sliding parts, obtained in a manner similar to that of the embodiment 1, were used.

First, the sliding parts were degreased. The degreasing agent was FC-315. The concentration of the degreasing agent was 20 g/l. The degreasing temperature was 60 ° C. The degreasing time was 2 minutes.

After degreasing, the sliding parts were rinsed in water.

Thereafter, the sliding parts were dipped in the aqueous solution containing hydrochloric acid (of a concentration of 10% by weight). The dipping temperature was 27 ° C. The dipping time was 180 seconds.

After dipping, the sliding parts were cleaned in running water.

Thereafter, FL-J4668 was sprayed with a spray gun so as to form a dry thickness of 3 µm. Then, the sprayed coating was baked at 200 ° C.

### Characteristics

The sliding parts obtained by the above-mentioned embodiments were inspected in adhesive property, corrosion resistance and sliding property of a paint film (a lubricating film). Table 1 shows the results. Moreover, the surface profiles of the B031 materials after etching process were inspected. Table 1 shows the results.

**Table 1**

| | Paint Film | | | B031 Material Surface | |
|---|---|---|---|---|---|
| | Adhesive property | Corrosion resistance | Sliding property | Porosity | Pore size ratio |
| Embodiment 1 | ○ | ○ | ○ | 27.9 | 15.6 |
| Embodiment 2 | ○ | ○ | ○ | 30.6 | 16.7 |
| Embodiment 3 | ○ | ○ | ○ | 25.1 | 13.4 |
| Embodiment 4 | ⓞ | ○ | ⓞ | 33.5 | 18.9 |
| Comparative Ex. 1 | × | Δ | × | 1.4 | 1.2 |

### Adhesive property (cross-cut test):

A paint film was cut with a cutter knife to form 100 gridirons, each having 1 mm x 1 mm. Next, an adhesive cellophane tape is applied onto the paint film and then peeled off. In this test, symbol ⓞ represents the case where no skin is peeled off. Symbol ○ represents the case where one to three pieces of skin are peeled off. Symbol Δ represents the case where 4 to 20 pieces of skin are peeled off. Symbol × represents the case where 21 pieces or more of skin are peeled off.

### Corrosion resistance:

A salt spray test was carried out in conformity with JIS-K5400. Symbol ○ indicates that there is no sign of generation of rust. Symbol Δ indicates that there is a sign of generation of rust. In the case where rust is recognized, the material is handled as a rejected article.

### Sliding property:

The load (N) until seizure occurs was inspected using the SRV friction/wear tester. The load to be applied was stepped up at a rate of 50 N/min. The frequency of vibration is 50 Hz and the amplitude is 2 mm. Steel balls having a diameter of 10 mm, made of SUJ-2, were used as the opposite material. The lubricant was not used. The case where the load of 5000 N or more is applied is shown by symbol ⓞ. The case where the load of 4000 to 5000 N is applied is shown by symbol ○. The case where the load of 2000 to 4000 N is applied is shown by symbol Δ. The case where the load of less than 2000 N is applied is shown by symbol ×.

### Porosity:

Porosities were measured in conformity with ISO2738: Permeable sintered metal materials determination of density, oil content and open porosity.

### Pore size ratio:

Pore size ratios were obtained under a microscope and using a pore quantity device. First, pores having an inlet diameter of 10 to 200 µm were obtained. Next, the corresponding inner pore diameters were obtained. Average values were obtained by calculating quotients.

The inlet pore diameter of each pore was obtained as follows:
1. First, a surface of a sintered material was photographed under a microscope and then the pores N1, N2, N3, ..., and Nn were specified.
2. The areas S1, S2, S3, ..., and Sn of the pores N1, N2, N3, ..., and Nn were obtained respectively.
3. Then, Dn (pore diameter) corresponding to the area Sn (=π(Dn)²)/4) was calculated, where n=1, 2, 3, ..., or n.
4. The pore diameters Dn (where n=1, 2, 3, ... ) corresponding to 10 to 200µm were specified as P1, P2, P3, ... respectively. The diameters of pores P1, P2, P3, ... were d₁₀, d₂₀, d₃₀, ... respectively.

The inner pore diameters are obtained according to the following procedure.
5. A surface of the sintered material was shaved off to a half of the original thickness of the sintered material.
6. The surface of the shaved sintered material was photographed under a microscope and thus the pores corresponding to the pores P1, P2, P3, ... were specified. Then, in a manner similar to those in the items (2) and (3), the pore diameters were calculated as d₁₁, d₂₁, d₃₁, ... respectively.
7. In succession, (d₁₀/d₁₁), (d₂₀/d₂₁) , (d₃₀/d₃₁), ... were obtained and then the average value of them was calculated.

The average value was defined as a pore diameter ratio.

The above-mentioned result proves that the sintered material of the present invention excels in the adhesive property of the film, which is formed on the sintered material through the selective chemical etching solution process. Furthermore, the sintered material has a good corrosion resistance and a good sliding property. That is, even in the case of the comparative example 1 that carries out the simple etching only but does not carry out the selective chemical etching, a skin is formed on the sintered material, in a manner similar to those in the embodiments. However, the skin is poor in adhesive property, corrosion resistance, and sliding property.

According to the present invention, a film of a solid lubricating agent such as PTFE or molybdenum disulfide can be fixed firmly and in adhesive state on the sintered material. Good sliding properties can be obtained under unlubricating conditions or under corrosive conditions.

## Claims

1. A sintered material product comprising:
a sintered copper alloy material; and
a skin formed on said sintered copper alloy material;
said sintered copper alloy material having pores each having an inlet diameter of 10 to 200 µm;
wherein an average value of (inlet pore diameter)/(inner pore diameter) of each of said pores is 2 or more.

2. The sintered material product claimed in Claim 1, wherein a porosity of said pores is 2 to 35% by volume and said average value of (inlet pore diameter)/(inner pore diameter) is 2 to 20.

3. The sintered material product claimed in Claim 1, further comprising a layer of metal phosphate and/or metal oxide underneath of said skin.

4. The sintered material product claimed in Claim 1, wherein said skin is a skin comprising a solid lubricant.

5. A method for manufacturing a sintered material product having a sintered copper alloy material and a skin formed on said sintered copper alloy material; comprising the steps of:
(A) processing said sintered copper alloy material with a selective chemical etching solution; and
(C) forming a skin on a surface of said sintered copper alloy material, after the step (A).

6. The method claimed in Claim 5, further comprising the steps of:
(B) forming a layer of metal phosphate and/or metal oxide on the surface of said sintered copper alloy material, after said step (A) and before said step (C).

7. The method claimed in Claim 5, wherein said selective chemical etching solution comprises a solution containing a compound of one kind or more selected from the group consisting of peroxide, peroxocompound, chromic acid, and permanganic acid.

8. The method claimed in Claim 5, wherein said selective chemical etching solution comprises a solution containing a compound of one kind or more selected from the group consisting of peroxide, peroxocompound, chromic acid, and permanganic acid and a compound of one kind or more selected from the group consisting of phosphoric acid, sulfuric acid, nitric acid, hydrochloric acid, hydrofluoric acid, zirconic hydrofluoric acid, titanic hydrofluoric acid, titanic acid, molybdic acid, tungstic acid, vanadic acid, niobic acid, and organic chelating agent.

9. The method claimed in Claim 6, wherein said step (B) comprises the step of processing said sintered copper alloy material with a solution of a metal compound of one kind or more selected from the group consisting of Zn, Ca, Mg, Mn, Ni, Co, Mo, W, Cu, Sn, Ti, Zr, V, In, and Cr.

10. The method claimed in Claim 5, further comprising the step of ultrasonic cleaning said sintered copper alloy material after said step (A) and before said step (C).

11. The method claimed in Claim 5, further comprising the step of processing said sintered copper alloy material with a solution containing an organic alkali compound after said step (A) and before said step (C).

12. The method claimed in Claim 6, further comprising the step of ultrasonic cleaning said sintered copper alloy material after said step (B) and before said step (C).

13. The method claimed in Claim 6, further comprising the step of processing said sintered copper alloy material with a solution containing an organic alkali compound after said step (B) and before said step (C).

14. The method claimed in Claim 5, wherein said skin comprises a solid lubricant.
